# EUROPEAN PATENT APPLICATION

(11) **EP 4 583 286 A1**
(43) Date of publication of application: **09.07.2025**
(21) Application number: 24847501.4
(22) Date of filing: 16.01.2024
(51) Int. Cl.: H01M 50/289

(54) **BATTERY PACK, ENERGY STORAGE DEVICE AND ENERGY STORAGE SYSTEM**

(30) Priority: 28.07.2023 CN 202322017511 U
(71) Applicant: Huawei Digital Power Technologies Co., Ltd., Shenzhen, Guangdong 518043 (CN)
(72) Inventor: JIANG, Rui, Shenzhen, Guangdong 518043 (CN); LUO, Yingjie, Shenzhen, Guangdong 518043 (CN); LIN, Min, Shenzhen, Guangdong 518043 (CN); MA, Pengcheng, Shenzhen, Guangdong 518043 (CN)
(74) Representative: Isarpatent
(86) International application number: PCT/CN2024/072630
(87) International publication number: WO 2025/025530

(57) **Abstract**

This application provides a battery pack, an energy storage apparatus, and an energy storage system. The energy storage apparatus includes a plurality of stacked battery packs. **In** two contact surfaces of two adjacent battery packs, a protective part and a first connector are disposed on one of the contact surfaces in a protruding manner, and a groove and a second connector are disposed on the other of the contact surfaces. The second connector is located in the groove, the protective part is pluggably connected to the groove, and the first connector is pluggably connected to the second connector. The energy storage apparatus can implement accurate alignment between the battery packs, thereby greatly reducing an assembly procedure and an assembly time for mounting the energy storage apparatus by a user, and improving assembly efficiency of the energy storage apparatus.

## Description

### TECHNICAL FIELD

This application relates to the field of energy storage technologies, and in particular, to a battery pack, an energy storage apparatus, and an energy storage system.

### BACKGROUND

With rapid development of energy storage technologies, batteries, as important components of an energy storage system, are widely used in daily life and industrial production. However, a voltage of a battery cell is low and cannot meet an existing use requirement. Therefore, a plurality of battery cells are usually connected in series to form a battery pack, and then a plurality of battery packs are connected in series or in parallel to form an energy storage cabinet, to meet the use requirement.

Generally, a plurality of battery packs are usually stacked, to expand a capacity of an energy storage apparatus. However, when adjacent up-down battery packs are stacked, misplacement easily occurs, which is not conducive to accurate alignment between the battery packs. An assembly procedure is complex and difficult, and consequently assembly efficiency and assembly reliability cannot be ensured.

### SUMMARY

This application provides an energy storage apparatus and an energy storage system. The energy storage apparatus includes a plurality of stacked battery packs. A protective part, a first connector, a groove, and a second connector may be separately disposed on an upper surface or a lower surface of the battery pack, to quickly implement accurate alignment and an electrical connection between the plurality of battery packs through embedding of a concave-convex structure, so that a user only needs to lift the battery pack and then slowly put down the battery pack, to implement a highly-reliable connection of a battery assembly. This greatly simplifies an assembly procedure of mounting the energy storage apparatus by the user, and improves assembly efficiency and assembly reliability of the energy storage apparatus.

According to a first aspect, this application provides an energy storage apparatus with a stacked structure. The energy storage apparatus includes a plurality of battery packs. The plurality of battery packs are stacked. In two contact surfaces of any two adjacent battery packs in the plurality of battery packs, a protective part and a first connector are disposed on one of the contact surfaces in a protruding manner, the protective part is disposed around a periphery of the first connector, and a groove and a second connector are disposed on the other of the contact surfaces. The second connector is located in the groove, the protective part is pluggably connected to the groove, and the first connector is pluggably connected to the second connector. In other words, an upper surface and a lower surface of two adjacent up-down battery packs are in contact with each other, and a protective part and a first connector may be located on an upper surface of one battery pack, and correspondingly, a groove and a second connector are disposed on a lower surface of the other battery pack, or a groove and a second connector are disposed on an upper surface of one battery pack, and a protective part and a second connector are disposed on a lower surface of the other battery pack. When one battery pack is stacked on an upper surface of another battery pack, a protective part and a groove that are respectively disposed on two contact surfaces of the two battery packs in a protruding manner are pluggably connected to implement first-level guiding. Due to a concave-convex design, two adjacent up-down battery packs are accurately aligned, to provide a first-level guiding function, and a terminal in a connector is prevented from being damaged due to a misalignment during direct interconnection of the terminal. In addition, a protective part and a groove can protect a connector and prevent foreign matters from entering the connector. A first connector and a second connector are pluggably connected, to implement second-level guiding of two battery packs. The first connector and second connector that are disposed in the protruding manner are pluggably connected, to further implement accurate alignment between the battery packs.

In addition, a first connector and a second connector are configured to accommodate a power terminal and a signal connection terminal that are extended from a battery pack, so that the power terminal does not need to be exposed to the battery pack, and a risk of damage to the power terminal is reduced. The first connector and the second connector can be interconnected accurately, to implement an electrical connection between electrical terminals of adjacent battery packs. This reduces complexity of a cable connection between battery packs, and reduces a risk of a missing connection/an incorrect connection.

In a possible implementation, the first connector is pluggably connected to the second connector, to fasten the two adjacent battery packs and implement second-level guiding of a plurality of battery packs, and to connect the two adjacent battery packs in series or in parallel. The protective part is pluggably connected to the groove, to fasten the two adjacent battery packs.

In a possible implementation, an orthographic projection of the protective part in a stacking direction of the plurality of battery packs falls within an orthographic projection of the groove in the stacking direction, so that the protective part and the groove are oppositely disposed. When the battery pack is placed upright and stacked on the installed battery pack, the protective part and the groove are oppositely disposed, to facilitate improvement of accurate alignment during stacking.

In a possible implementation, a maximum spacing of an edge of a periphery of the protective part is less than or equal to a maximum spacing of an inner wall of the groove. Therefore, the protective part is more accurately plugged into the groove. In addition, specific floating space is provided for the protective part to be plugged into the groove. This increases tolerance to a material processing error.

In a possible implementation, a height of the periphery of the protective part is less than or equal to a depth of the groove, so that the protective part is completely located in the groove, to avoid a gap between contact surfaces of two adjacent up-down battery packs, and prevent foreign matters from entering the energy storage apparatus. This improves security and reliability of the energy storage apparatus.

In a possible implementation, the battery pack includes a power module and a battery module. The power module and the battery module are arranged in a direction perpendicular to the stacking direction. A first connector and a second connector are respectively located on two surfaces that are of the power module and that are oppositely disposed in the stacking direction. The power module first boosts a direct current output by the battery module, and then outputs a boosted direct current to a direct current bus, so that the energy storage apparatus can implement higher power output. The connectors are disposed on the power module, so that a terminal of a power cable of the power module is electrically connected through the first connector and the second connector, and the power cable is not connected to the direct current bus through the battery module. This saves the power cable and space.

In a possible implementation, in any two adjacent battery packs in the plurality of battery packs, a fastening plate is disposed at an edge of an upper surface of one of the battery packs in a protruding manner, and a recessed portion is disposed at an edge of a lower surface of the other of the battery packs. The fastening plate is located in the recessed portion. The fastening plate at the edge of the battery pack may limit the battery pack on the battery pack, so that the upper battery pack does not slide left or right or forward or backward. This improves structural stability and reliability of the energy storage apparatus.

In a possible implementation, an orthographic projection of the fastening plate in the stacking direction of the plurality of battery packs falls within an orthographic projection of the recessed portion in the stacking direction, so that the fastening plate and the recessed portion are oppositely disposed up and down. This improves stacking accuracy.

In a possible implementation, a plurality of fastening sub-plates are disposed on an upper surface of each of the plurality of battery packs, all the plurality of fastening sub-plates are fastened to the fastening plate, and an extension direction of the plurality of fastening sub-plates is perpendicular to a protruding direction of the fastening plate, to enhance mechanical strength of the fastening plate.

In a possible implementation, a chamfer is disposed at an edge, that is of an upper surface of each of the plurality of fastening sub-plates and that is far away from the fastening plate, to prevent the upper battery pack from colliding when the upper battery is stacked on the battery pack.

In a possible implementation, two adjacent up-down side walls of any two adjacent up-down battery packs in the plurality of battery packs are fastened to one connection plate. Some screw holes may be disposed at upper and lower ends of the connection plate, and the screw holes match screws to respectively fasten the upper and lower ends of the connection plate to the two adjacent up-down battery packs, so that a mechanical connection between the battery packs is implemented, and the battery packs do not slide left or right or forward or backward. This improves stability and reliability of the stacked structure.

In a possible implementation, the energy storage apparatus includes a battery control unit (BCU) , and the BCU is disposed at a top of the plurality of battery packs. In two contact surfaces of the top battery pack and the BCU, a protective part and a first connector are disposed on one of the contact surfaces in a protruding manner, the protective part is disposed around a periphery of the first connector, and a groove and a second connector are disposed on the other of the contact surfaces. The second connector is located in the groove, the protective part is pluggably connected to the groove, and the first connector is pluggably connected to the second connector. A first connector on the top battery pack is plugged into a groove of the BCU and is electrically connected to a corresponding second connector, to implement an electrical connection between the BCU and a plurality of battery packs.

In a possible implementation, the energy storage apparatus includes a base, and the base is disposed at a bottom of the plurality of battery packs. In two contact surfaces of the bottom battery pack in the plurality of battery packs and the base, a protective part is disposed on the contact surface of the base in a protruding manner, and a groove is disposed on the contact surface of the battery pack. The protective part is pluggably connected to the groove. The base is used as a basis for supporting a plurality of battery packs, thereby improving support stability and reliability of an overall structure of the energy storage apparatus.

In a possible implementation, in two contact surfaces of any two adjacent battery packs in the plurality of battery packs, a positioning pin is disposed on one of the contact surfaces in a protruding manner, the positioning pin extends in the stacking direction of the plurality of battery packs, and a positioning slot is disposed on the other of the contact surfaces. The positioning slot extends in the stacking direction of the plurality of battery packs, and the positioning pin is pluggably connected to the positioning slot. The positioning pin and the positioning slot are pluggably connected, to implement third-level guiding of the battery pack, so that a to-be-mounted battery pack can be accurately aligned with a mounted battery pack.

In a possible implementation, an orthographic projection of the positioning pin in the stacking direction of the plurality of battery packs falls within an orthographic projection of the positioning slot in the stacking direction of the plurality of battery packs, so that the positioning pin and the positioning slot are oppositely disposed up and down. This improves accuracy of stacking the plurality of battery packs up and down.

In a possible implementation, a shape of the orthographic projection of the positioning pin in the stacking direction of the plurality of battery packs is the same as a shape of the orthographic projection of the positioning slot in the stacking direction of the plurality of battery packs. This further improves the accuracy of stacking the plurality of battery packs up and down.

In a possible implementation, an extension length of the positioning pin is less than or equal to an extension length of the positioning slot, so that a gap is avoided between two adjacent up-down battery packs when a plurality of battery packs are stacked. This improves a capability of preventing foreign matters.

In a possible implementation, an outer diameter of the positioning pin is less than or equal to an inner diameter of the positioning slot. Therefore, the positioning pin is more accurately plugged into the positioning slot. In addition, specific floating space is provided for the positioning pin to be plugged into the positioning slot. This increases tolerance to a material processing error.

In a possible implementation, a plug is disposed on a side that is of the first connector and that is away from the battery pack in which the first connector is located. A first accommodating cavity is disposed on a side that is of the first connector and that is close to the battery pack in which the first connector is located, and the plug extends to the first accommodating cavity. The plug includes a plurality of first mounting holes, and the first mounting holes extend in the stacking direction of the plurality of battery packs. A socket is disposed on a side that is of the second connector and that is away from the battery pack in which the second connector is located. A second accommodating cavity is disposed on the side that of the second connector and that is away from the battery pack in which the second connector is located. The plug extends to the second accommodating cavity. The socket includes a plurality of second mounting holes, and an extension direction of the second mounting holes extends in the stacking direction of the plurality of battery packs. The plug is plugged into the socket. The plurality of first mounting holes are in a one-to-one correspondence with the plurality of second mounting holes. The plug matches the socket, to implement the pluggable connection between the first connector and the second connector, and further improve accurate alignment between the battery packs. First mounting holes and second mounting holes are configured to accommodate power terminals or signal terminals extended from battery packs, so that when the battery packs are stacked, an electrical connection between power terminals or signal terminals of two adjacent up-down battery packs is automatically implemented through interconnection of a first connector and a second connector. This avoids a connection manner in which an electrical cable is exposed outside the battery pack, and reduces a risk of a missing connection/an incorrect connection.

In a possible implementation, each battery pack includes a plurality of first connection terminals and a plurality of second connection terminals. The plurality of first connection terminals are in a one-to-one correspondence with the plurality of first mounting holes, the plurality of first connection terminals are respectively plugged into the plurality of first mounting holes, the plurality of second connection terminals are in a one-to-one correspondence with the plurality of second mounting holes, the plurality of second connection terminals are respectively plugged into the plurality of second mounting holes, the first connection terminals are electrically connected to the corresponding second connection terminals, and the first connection terminals and the second connection terminals may have a same function, for example, may be signal terminals. A connection between connection terminals of battery packs is implemented in this interconnection manner. This reduces cables for stacking the battery packs, and reduces a risk of an incorrect connection and a missing connection in a mounting process.

In a possible implementation, the first connector includes a locking structure. A mounting groove is disposed in a first plug, and an extension direction of the mounting groove is perpendicular to an extension direction of the first mounting hole. The locking structure is slidably connected to the mounting groove. A limiting groove is disposed on the first connection terminal. A limiting protrusion is disposed on the locking structure. When the locking structure slides to a first position, the limiting protrusion is located in the limiting groove, to limit movement of the first connection terminal in the stacking direction of the plurality of battery packs. A locking structure is disposed to prevent a pin from being disconnected from a connection terminal. In a process of stacking battery packs, pins are not disconnected from connectors even if being heavily impacted. Regardless of whether the connectors are obliquely plugged or vertically drop, connection reliability can be ensured, and blind-mate mounting can be met in a heavy stacking scenario.

In a possible implementation, the first connector and the second connector each include two ends that are oppositely disposed in a direction perpendicular to the stacking direction of the plurality of battery packs, arc-shaped grooves are disposed at the two ends of the first connector, through holes are disposed at the two ends of the second connector, and the arc-shaped grooves and the through holes are used to mount screws. An inner diameter of the arc-shaped groove and an inner diameter of the through hole are greater than an outer diameter of the screw, to provide specific floating space for fastening the first connector and the second connector through the screws, avoid a case in which connectors between battery packs cannot be interconnected accurately due to a material or a manufacturing process, and avoid terminal damage caused by a hard connection. This improves connection efficiency, and ensures connection accuracy. Therefore, a user can perform blind mating to some extent and finally achieve a correct plugging state.

In a possible implementation, the first connector includes a plurality of assembly columns, the plurality of assembly columns extend to the first accommodating cavity, a third mounting hole is disposed in the assembly column, and the third mounting hole extends in the stacking direction of the plurality of battery packs. The second connector includes a plurality of assembly cavities, the assembly cavities extend to the second accommodating cavity, a fourth mounting hole is disposed in the assembly cavity, and the fourth mounting hole extends in the stacking direction of the plurality of battery packs. The plurality of assembly columns are in a one-to-one correspondence with the plurality of assembly cavities, and the assembly columns are plugged into the corresponding assembly cavities. Each cross section of the assembly column and the assembly cavity may be a circle or a square, and a diameter of the assembly column is slightly less than an inner diameter of the corresponding assembly cavity. The assembly columns are plugged into the corresponding assembly cavities, to further implement accurate alignment between battery packs.

In a possible implementation, each battery pack includes a plurality of third connection terminals and a plurality of fourth connection terminals. The plurality of third connection terminals are in a one-to-one correspondence with the plurality of third mounting holes, and the plurality of third connection terminals are respectively plugged into the plurality of third mounting holes. The plurality of fourth connection terminals are in a one-to-one correspondence with the plurality of fourth mounting holes, and the plurality of fourth connection terminals are respectively plugged into the plurality of fourth mounting holes. The third connection terminals are electrically connected to the corresponding fourth connection terminals. The third connection terminal has a same function as the fourth connection terminal, but has a different function from the first connection terminal, thereby enriching functions of connectors.

In a possible implementation, an inner diameter of the first mounting hole is less than an inner diameter of the third mounting hole, and an inner diameter of the second mounting hole is less than an inner diameter of the fourth mounting hole. The first mounting hole may be configured to fasten a signal terminal, and the third mounting hole may be configured to fasten a power terminal, so that a first connector and a second connector implement both functions of an electrical connection and a signal connection, thereby enriching functions of the connectors.

In a possible implementation, a mounting plate is disposed on a side wall of the energy storage apparatus, and the mounting plate is configured to mount the energy storage apparatus on a building, so that the energy storage apparatus does not tilt. When the energy storage apparatus is used in a residential scenario, the building may be a wall, and the mounting plate fastens the energy storage apparatus on an indoor or outdoor wall, and an indoor floor area is not occupied. This facilitates use and design by the user.

According to a second aspect, this application further provides an energy storage system. The energy storage system includes an energy storage apparatus and an inverter. The inverter is configured to convert a direct current output by the energy storage apparatus into an alternating current, and output the alternating current to an external load or a power grid; and/or the inverter is configured to convert an alternating current output by the power grid into a direct current, and output the direct current to the energy storage apparatus.

According to a third aspect, this application further provides a battery pack. A protective part and a first connector are disposed on an upper surface of the battery pack in a protruding manner, the protective part is disposed around a periphery of the first connector, a groove and a second connector are disposed on a lower surface of the battery pack, and an orthographic projection of the protective part in a height direction of the battery pack falls within an orthographic projection of the groove in the height direction of the battery pack.

In a possible implementation, a fastening plate is disposed at an edge of the upper surface of the battery pack in a protruding manner, a recessed portion is disposed at an edge of the lower surface of the battery pack, and an orthographic projection of the fastening plate in the height direction of the battery pack falls within an orthographic projection of the recessed portion in the height direction of the battery pack.

In a possible implementation, a plurality of fastening sub-plates are disposed on the upper surface of the battery pack, all the plurality of fastening sub-plates are fastened to the fastening plate, and an extension direction of the plurality of fastening sub-plates is perpendicular to a protruding direction of the fastening plate.

In a possible implementation, a positioning pin is disposed on the upper surface of the battery pack in a protruding manner, the positioning pin extends in the height direction of the battery pack, a positioning slot is disposed on the lower surface of the battery pack, an extension direction in which the positioning slot extends in the height direction of the battery pack is opposite to an extension direction of the positioning pin, and an orthographic projection of the positioning pin in the height direction of the battery pack falls within an orthographic projection of the positioning slot in the height direction of the battery pack.

According to a fourth aspect, an energy storage apparatus includes at least one battery pack provided in the third aspect and a base. The base is located under the battery pack.

In a possible implementation, the energy storage apparatus further includes a battery control unit BCU, and the BCU is located at the top of the battery pack.

For beneficial effect of the second aspect to the fourth aspect, refer to beneficial effect of the energy storage apparatus provided in the first aspect. Details are not described herein again.

### BRIEF DESCRIPTION OF DRAWINGS

FIG. 1 is a diagram of an application scenario of an energy storage apparatus according to an embodiment of this application;
FIG. 2 is a schematic diagram of a first structure of an energy storage apparatus according to an embodiment of this application;
FIG. 3 is a schematic diagram of a first structure of a battery pack in an energy storage apparatus according to an embodiment of this application;
FIG. 4 is a schematic diagram of a second structure of a battery pack in an energy storage apparatus according to an embodiment of this application;
FIG. 5 is a schematic diagram of a third structure of a battery pack in an energy storage apparatus according to an embodiment of this application;
FIG. 6 is a partial top view of an upper surface of a battery pack and a lower surface of the battery pack in an energy storage apparatus according to an embodiment of this application;
FIG. 7 is a schematic diagram of a partial structure of an upper surface of a battery pack in an energy storage apparatus according to an embodiment of this application;
FIG. 8 is a schematic diagram of a fourth structure of a battery pack in an energy storage apparatus according to an embodiment of this application;
FIG. 9 is a schematic diagram of a second structure of an energy storage apparatus according to an embodiment of this application;
FIG. 10 is a schematic diagram of a first structure of a BCU in an energy storage apparatus according to an embodiment of this application;
FIG. 11 is a schematic diagram of a third structure of an energy storage apparatus according to an embodiment of this application;
FIG. 12 is a schematic diagram of a first structure of a base in an energy storage apparatus according to an embodiment of this application;
FIG. 13 is a schematic diagram of a first structure of a protective part on a base in an energy storage apparatus according to an embodiment of this application;
FIG. 14 is a schematic diagram of assembly of a first connector and a second connector in an energy storage apparatus according to an embodiment of this application;
FIG. 15 is a schematic diagram of a first structure of a first connector in an energy storage apparatus according to an embodiment of this application;
FIG. 16 is a schematic diagram of a first structure of a second connector in an energy storage apparatus according to an embodiment of this application;
FIG. 17 is a schematic diagram of a second structure of a first connector in an energy storage apparatus according to an embodiment of this application;
FIG. 18 is a schematic diagram of assembly of a first connector and a first connection terminal in an energy storage apparatus according to an embodiment of this application;
FIG. 19 is a schematic diagram of assembly of a second connector and a second connection terminal in an energy storage apparatus according to an embodiment of this application;
FIG. 20 is a schematic diagram of a third structure of a first connector in an energy storage apparatus according to an embodiment of this application;
FIG. 21 is a schematic diagram of a fourth structure of a first connector in an energy storage apparatus according to an embodiment of this application;
FIG. 22 is a schematic diagram of a structure of a first connection terminal in an energy storage apparatus according to an embodiment of this application;
FIG. 23 is a schematic diagram of a fifth structure of a first connector in an energy storage apparatus according to an embodiment of this application;
FIG. 24 is a schematic diagram of a structure of a third connection terminal in an energy storage apparatus according to an embodiment of this application;
FIG. 25 is a diagram of an electrical connection of an energy storage apparatus according to an embodiment of this application;
FIG. 26 is a schematic diagram of a fourth structure of a battery pack in an energy storage apparatus according to an embodiment of this application;
FIG. 27 is a schematic diagram of a fourth structure of an energy storage apparatus according to an embodiment of this application; and
FIG. 28 is a schematic diagram of a structure of a mounting plate in an energy storage apparatus according to an embodiment of this application.

Descriptions of reference numerals:
500: energy storage apparatus; 510 (511, 512, 513): battery pack; 5101: upper surface of the battery pack; 5102: lower surface of the battery pack; 5103: side wall of the battery pack; 5105: first connection terminal; 51051: limiting groove; 5106: second connection terminal; 520: BCU; 5202: lower surface of the BCU; 530: base; 5301: upper surface of the base; 540: first connector; 541: protective part; 5411: first sealing ring; 542: plug; 5421: first mounting hole; 543: assembly column; 5431: third mounting hole; 54311: support spring coil; 544: first accommodation cavity; 545: arc-shaped groove; 546: screw; 547: guide column; 548: first locking structure; 5481: limiting protrusion; 5482: positioning protrusion; 5483: disassembly hole; 549: first mounting groove; 550: second connector; 551: groove; 5511: second sealing ring; 552: socket; 5521: second mounting hole; 553: assembly cavity; 5531: fourth mounting hole; 554: second accommodation cavity; 555: through hole; 558: second locking structure; 560: mounting plate; 580: positioning pin; 590: fastening plate; 5901: fastening sub-plate; and 5902: connection plate.

### DESCRIPTION OF EMBODIMENTS

To make objectives, technical solutions, and advantages of this application clearer, the following further describes this application in detail with reference to accompanying drawings. However, example implementations can be implemented in a plurality of forms, and should not be construed as being limited to implementations described herein. Same reference numerals in the figures indicate same or similar structures. Therefore, repeated descriptions thereof are omitted. Words that express positions and directions in embodiments of this application are described by using the accompanying drawings as an example. However, changes may also be made as required, and all the changes fall within the protection scope of this application. The accompanying drawings in embodiments of this application are merely used to illustrate relative position relationships and do not represent an actual scale.

For ease of understanding, terms in embodiments of this application are first explained.

A battery control unit (Battery Control Unit, BMU for short) intelligently manages and maintains battery units, to prevent a battery from being overcharged and overdischarged, prolong a service life of the battery, and monitor a battery status.

The term "and/or" describes only an association relationship for describing associated objects and represents that three relationships may exist. For example, A and/or B may represent the following three cases: Only A exists, both A and B exist, and only B exists.

"A plurality of" means "two or more".

A "connection" should be understood in a broad sense. For example, the "connection" may be a detachable connection, an undetachable connection, a direct connection, or an indirect connection through an intermediate medium. "Fastening" should also be understood in a broad sense. For example, the "fastening" may be direct fastening or indirect fastening through an intermediate medium.

Orientation terms mentioned in embodiments of this application, for example, "on", "below", "front", "rear", "left", "right", "inside", "outside", "side face", "top", and "bottom", refer to directions in the accompanying drawings only. The orientation terms are used for better and clearer illustration and understanding of embodiments of this application, and do not explicitly or implicitly indicate that the specified apparatus or element needs to have a specific orientation, and be constructed and operated in a specific orientation. Therefore, the orientation terms cannot be construed as a limitation on embodiments of this application.

In descriptions of embodiments of this application, unless otherwise specified, "and/or" describes only an association relationship for describing associated objects, and represents that three relationships may exist. For example, A and/or B may represent the following three cases: Only A exists, both A and B exist, and only B exists.

The following embodiment of this application provides an energy storage apparatus. This battery pack may be used in an energy storage application scenario of photovoltaic power generation.

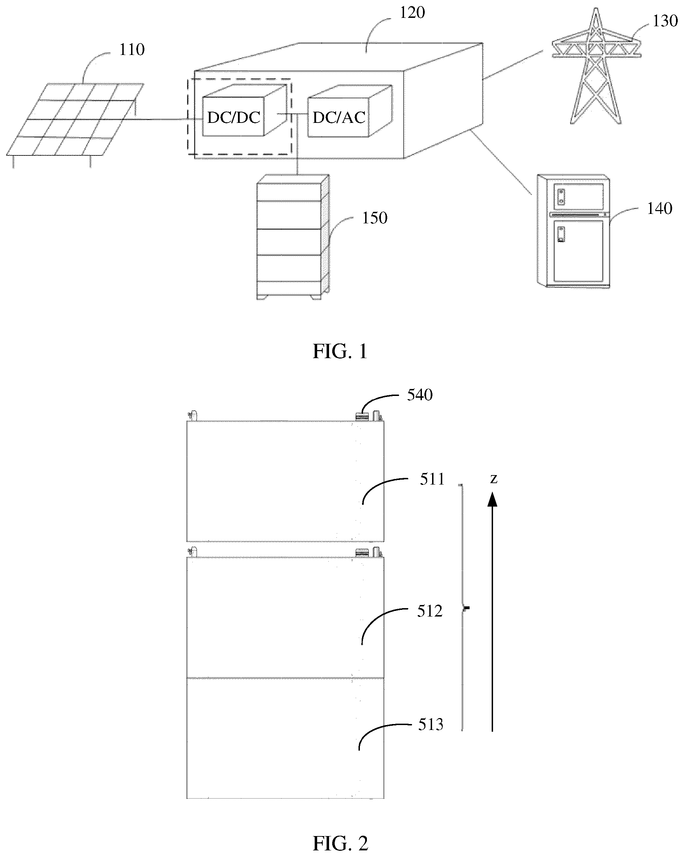

For example, FIG. 1 is a schematic diagram of a framework structure of a photovoltaic system. As shown in FIG. 1, the photovoltaic system includes a photovoltaic array 110, a power converter 120, an energy storage apparatus 150, and a power grid 130/an external load 140. The power converter 120 may integrate a DC/DC conversion circuit and a DC/AC conversion circuit. The energy storage apparatus 150 may be located between the DC/DC conversion circuit and the DC/AC conversion circuit. The energy storage apparatus 120 may be charged after electric energy generated by the photovoltaic array 110 is boosted or bucked through the DC/DC conversion circuit. When the electric energy generated by the photovoltaic array 110 is insufficient to supply power to the power grid 130/the external load 140, electric energy stored in the energy storage apparatus 150 may be transmitted to the power grid 130/the external load 140 through the DC/AC conversion circuit in the power converter 120. In addition, the energy storage apparatus 150 may further receive power supplied from the power grid 130. An alternating current output by the power grid 130 is converted into a direct current through the DC/AC conversion circuit, and then the direct current is transmitted to the energy storage apparatus 150, to charge the energy storage apparatus 150. Alternatively, the power converter 120 includes only a DC/AC conversion circuit. The energy storage apparatus 150 has a built-in DC/DC conversion circuit, and the energy storage apparatus directly receives a direct current power generated by the photovoltaic array 110. Therefore, an increasing requirement is imposed on a capacity of the energy storage apparatus. Generally, in a residential energy storage scenario, a plurality of battery packs are stacked to increase the capacity of the energy storage apparatus. Therefore, how to improve stacking accuracy and assembly efficiency becomes a problem that needs to be urgently resolved currently.

This application provides an energy storage apparatus 500 with a stack structure. Refer to a schematic diagram of a structure of the energy storage apparatus shown in FIG. 2. The energy storage apparatus 500 includes a plurality of battery packs 510. The plurality of battery packs 510 are sequentially stacked from bottom to top. An arrow direction z in FIG. 2 is a stacking direction of the plurality of battery packs 510. A quantity of battery packs 510 may be adaptively adjusted based on an actual application scenario when the plurality of battery packs 510 are stacked, to meet capacity requirements of the energy storage apparatus in different application scenarios. A first connector 540 and a second connector 550 are respectively disposed on two contact surfaces of adjacent battery packs 510, to enhance guiding performance and positioning accuracy of stacked battery packs 510. The first connector 540 is disposed on one of the contact surfaces in a protruding manner, and a groove 551 and the second connector 550 are disposed on the other of the contact surfaces. The second connector 550 is disposed inside the groove. A protective part 541 is disposed around a periphery of the first connector 540, the protective part 541 is pluggably connected to the groove 551 to implement first-level guiding between the plurality of battery packs 510, and the first connector 540 is pluggably connected to the second connector 550 to implement second-level guiding of the second connector 550. A design of a concave-convex structure improves accuracy of interconnection of the plurality of battery packs 510. The protective part 541 and the groove 551 are respectively disposed around peripheries of the first connector 540 and the second connector 550. When one battery pack 510 is placed on another battery pack 510, a protective part 541 is plugged into a groove 551 on a lower surface 5102 of the battery pack 510, to provide a guiding function and prevent terminals in the connectors from being damaged due to misalignment during direct interconnection. In addition, the protective part 541 can protect the connectors and prevent foreign matters from entering the connectors. In addition, the first connector 540 and the second connector 550 do not need to be exposed to the battery packs 510. This reduces risks of a failure and moisture of the terminal of the connector, and improves security performance of the terminal inside the connector. The protective part 541 may be made of a metal material with high rigidity and strength, to enhance mechanical strength of the protective part 541.

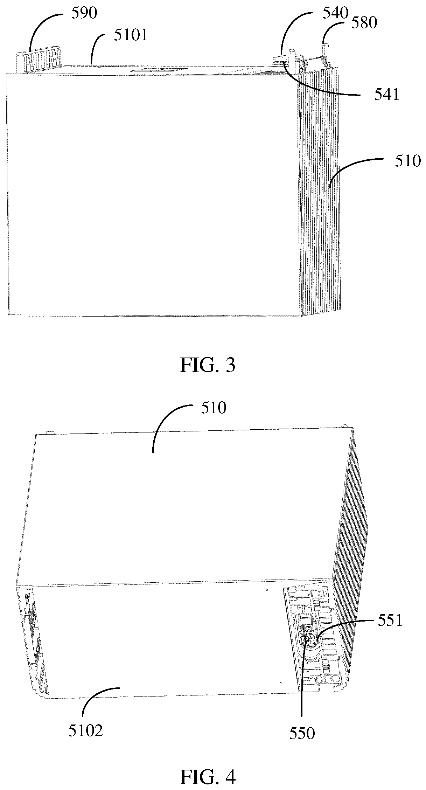

In this embodiment of this application, an example in which a first connector and a protective part are disposed on an upper surface of a battery pack in a protruding manner, and a groove and a second connector are disposed on a lower surface of the battery pack is used. Refer to schematic diagrams of structures of the battery pack shown in FIG. 3 and FIG. 4. A first connector 540 is disposed on an upper surface 5101 of each battery pack 510 in a protruding manner, and grooves 551 are disposed on both the lower surface 5102 of each battery pack 510 and a lower surface of a BCU 520. A second connector 550 is disposed in the groove 551. In this embodiment of this application, an example in which the energy storage apparatus includes three battery packs 511, 512, and 513 that are stacked from bottom to top is used. As shown in FIG. 2, a first connector 540 on an upper surface of the battery pack 512 is plugged into a groove 551 on a lower surface of the battery pack 511 and is connected to a corresponding second connector 550, so that the battery pack 511 and the battery pack 512 are fastened, and the battery pack 511 and the battery pack 512 are connected in series or in parallel. Due to a structure in which the first connector 540 protrudes from the surface of the battery pack 510 and a structure in which the groove 541 is disposed on the lower surface of the battery pack 510, when assembling the energy storage apparatus 500, a user only needs to gently lift the battery pack 510 and then slowly put it down, so that different battery packs 510 are automatically positioned and embedded into an entire under guidance of the protective part 541, the groove 551, the first connector 540, and the second connector 550, and under action of gravity of the battery packs 510. This helps implement accurate positioning and quick mounting of the energy storage apparatus 500. In addition, no additional cable needs to be connected. This improves assembly efficiency of the energy storage apparatus 500, and reduces a risk of an incorrect connection/a missing disconnection of a cable.

According to the energy storage apparatus 500 provided in this embodiment of this application, any quantity of battery packs 510 may be stacked up and down based on an actual requirement. This facilitates an increase or a decrease of a battery capacity, diversifies application scenarios of the energy storage apparatus 500, and facilitates a mounting operation.

The groove 551 and the first connector 540 may be alternatively disposed reversely. To be specific, a groove 551 and a second connector 550 are disposed on an upper surface of a battery pack 510, and a first connector 540 is disposed on a lower surface of a battery pack 510. A first connector 540 disposed on a lower surface of a battery pack 510 is plugged into a groove 551 disposed on an upper surface of an adjacent battery pack 510, to implement a connection between a plurality of battery packs 510.

A specific position and quantity of first connectors 540 in the battery pack 510 are not specifically limited in embodiments of this application, and persons skilled in the art may perform selection and design based on an actual requirement.

In a same battery pack 510, a first connector 540 and a second connector 550 are oppositely disposed up and down, or in a same battery pack 510, orthographic projections of a first connector 540 and a second connector 550 in a horizontal plane are centrally symmetrically disposed about a center of the battery pack 510, to improve alignment accuracy of a plurality of battery packs 510. An orthographic projection of a protective part 541 in the z direction falls into an orthographic projection of a groove in the z direction. Due to a design in which a maximum spacing of an edge of a periphery of the protective part 541 is less than or equal to a maximum spacing of an inner wall of the groove 551, and a size of the periphery of the protective part 541 is less than or equal to a size of an inner diameter of the groove 551, the protective part 541 is more accurately plugged into a corresponding groove 551, and specific floating space is provided for the protective part 541 to be plugged into the groove 551. This increases tolerance to a material processing error. For example, a size difference between the inner diameter of the groove 551 and the periphery of the protective part 541 is 1 mm. A height of the periphery of the protective part 541 is less than or equal to a depth of the groove 551. In this way, the protective part 541 and the corresponding groove 551 are interconnected perfectly, to avoid a gap between contact surfaces of two adjacent up-down battery packs 510 and prevent foreign matters from entering the energy storage apparatus 500. This improves security and reliability of the energy storage apparatus 500.

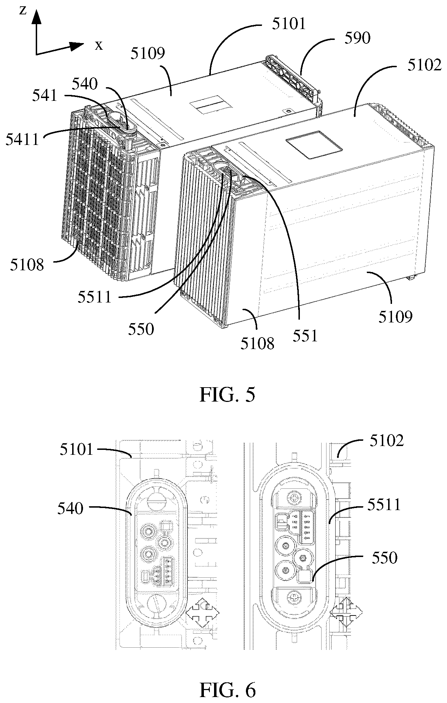

Refer to a schematic diagram of structures of a top surface and a bottom surface of a battery pack shown in FIG. 5 and a sectional view of a first connector 540 and a second connector 550 in a z direction shown in FIG. 6. A first sealing ring 5411 is sleeved on a periphery of a protective part 541, to ensure waterproof and dustproof effect between the first connector 540 and a corresponding groove 551, so as to improve airtightness of the energy storage apparatus 500.

As shown in FIG. 5, a second sealing ring 5511 is disposed around a periphery of the groove 551, to ensure waterproof and dustproof performance after the first connector 540 is plugged into the corresponding groove 551, so as to improve airtightness of the energy storage apparatus 500.

Both the first sealing ring 5411 and the second sealing ring 5511 may be rubber sealing rings. An inner diameter of the first sealing ring 5411 is equal to an outer diameter of the protective part 541, and an inner diameter of the second sealing ring 5511 is equal to an inner diameter of the groove 5511. The first sealing ring 5411 and the second sealing ring 551 may be O-shaped.

As shown in FIG. 5, the battery pack 510 includes a power module 5108 and a battery module 5109. The power module 5108 and the battery module 5109 are in an x direction, where the x direction is perpendicular to a stacking direction of the battery pack 510. The first connector 540 and the second connector 550 are respectively located on two oppositely disposed surfaces of the power module in the z direction. A plurality of battery packs 510 are connected in parallel or in series. Power modules 5109 boost a direct current output by the battery modules 5108, and output a boosted direct current to a direct current bus. The connectors are disposed on the power modules 5108, so that terminals of power cables of the power modules 5108 are electrically connected through corresponding first connectors 540 and second connectors 550. This is applicable to an energy storage scenario of a serial high voltage or a parallel high voltage. The serial high voltage and the parallel high voltage each are an energy storage scenario in which the battery modules are first boosted by the power modules and then connected in series or in parallel.

When a plurality of battery packs are stacked, to prevent the battery packs 510 from sliding left or right, a fastening plate 590 may be disposed at an edge of an upper surface 5101 of one battery pack 510 in a protruding manner. Refer to schematic diagrams of the structures of the battery pack 510 shown in FIG. 4 and FIG. 5. A recessed portion is disposed at an edge of a lower surface of another battery pack, and the fastening plate 590 is located in the recessed portion. The fastening plate 590 that is disposed in the protruding manner can limit the battery pack located on the battery pack.

If only one fastening plate 590 is disposed at the edge of a battery pack 510, the fastening plate 590 on an upper surface of the battery pack 510 is easily damaged when another battery pack 510 is placed on the battery pack 510. Therefore, a plurality of fastening sub-plates 5901 may be further disposed on the upper surface of the battery pack 510. All the plurality of fastening sub-plates 5901 are fastened to the fastening plate 590. The plurality of fastening sub-plates 5901 extend in the x direction. An extension direction of the plurality of fastening sub-plates 5901 is perpendicular to a protruding direction of the fastening plate, to enhance mechanical strength of the fastening plate 590. A chamfer is disposed at an edge that is of each of the plurality of fastening sub-plates 5901 and that is away from the fastening plate 590. The chamfer is disposed, so that when another battery pack 510 is stacked on the battery pack, collision is avoided when an end of the another battery pack 510 is in contact with the chamfer.

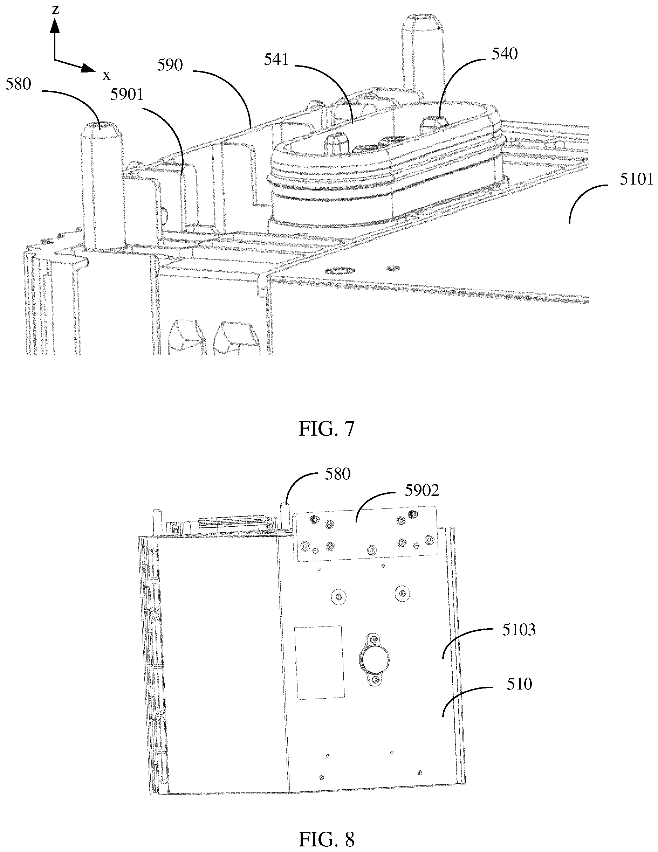

Two adjacent side walls 5103 of two adjacent up-down battery packs 510 each are fastened to one connection plate 5902. Refer to a schematic diagram of the structure of the battery pack 510 shown in FIG. 8. A plurality of screw holes are disposed at an upper end and a lower end of a connection plate 5902, and the screw holes at the upper end and the lower end match screws to respectively fasten the two ends of the connection plate 5902 to the two adjacent up-down battery packs 510. Connection plates 5902 are used to implement fastening of a plurality of battery packs 510, and the battery pack 510 can be placed on a horizontal plane to slide. This further enhances mechanical structure stability of the energy storage apparatus 500.

As shown in FIG. 7, a positioning pin 580 is disposed on an upper surface 5101 of each battery pack 510, and correspondingly, a positioning slot is disposed on a lower surface 5102 of each battery pack 510. Any two adjacent battery packs 510 are connected through a corresponding positioning pin 580 and positioning slot, and a mechanical connection between the battery packs 510 is implemented through fit between the positioning pin 580 and the positioning slot. The positioning pins 580 may be located at any position on the upper surface 5101 of the battery pack 510, and a quantity of the positioning pins may also be designed based on an actual requirement. For example, there may be four positioning pins 580, which are located at four corners of the upper surface 5101 of the battery pack 510. Correspondingly, positioning slots are located at four corners of the lower surface 5102 of the battery pack 510. Positions of a positioning pin 580 and a positioning slot may also be reversed. To be specific, a positioning slot is disposed on an upper surface 5101 of each battery pack 510, and a positioning pin 580 is disposed on a lower surface 5102 of each battery pack 510.

An orthographic projection of the positioning pin 580 in the z direction falls within an orthographic projection of the positioning slot in the z direction, so that the positioning pin 580 and the positioning slot are oppositely disposed up and down, to improve accuracy of interconnection of the positioning pin 580 and the corresponding positioning slot. A shape of the orthographic projection of the positioning pin 580 in the z direction is the same as a shape of the orthographic projection of the positioning slot in the z direction. For example, the shapes of the orthographic projections of the positioning pin 580 and the positioning slot in the z direction each are a circle, a rectangle, a polygon, or the like. In addition, an extension length of the positioning pin 580 is less than or equal to an extension length of the positioning slot, so that a gap is avoided between two adjacent up-down battery packs 510. This improves a capability of preventing foreign matters. In addition, an outer diameter of the positioning pin 580 is less than or equal to an inner diameter of the positioning slot. Therefore, the positioning pin 580 is more accurately plugged into the positioning slot. In addition, specific floating space is provided for the positioning pin 580 to be plugged into the positioning slot. This increases tolerance to a material processing error. For example, a size difference between the inner diameter of the positioning slot and the outer diameter of the positioning pin is 1 mm.

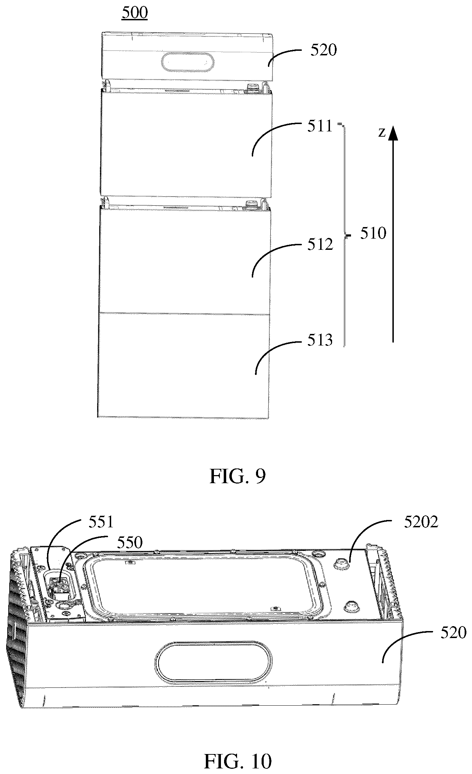

In an example, the energy storage apparatus 500 further includes a battery control unit BCU 520. The BCU 520 is configured to: monitor an operating state of the energy storage apparatus 500, to ensure secure and reliable operation of the energy storage apparatus 500; intelligently manage and maintain each battery pack 510; monitor and collect status parameters (a voltage, a temperature, a current, a SOC, a SOH, and the like of the battery pack 510/an electrochemical cell in the battery pack 510) of the battery pack 510 in real time, and perform necessary analysis and calculation on a parameter of a related state to obtain more system status evaluation parameters; and effectively manage and control the energy storage apparatus 500 according to a specific protection control policy, for example, implement functions such as battery equalization and power failure protection, to ensure secure and reliable operation of the entire energy storage apparatus 500. In addition, the BCU 520 may exchange information with another peripheral device (PCS) through a communication interface and an analog/digital input/output structure of the BCU 520. Refer to a schematic diagram of a structure of the energy storage apparatus 500 shown in FIG. 9. The BCU 520 may be disposed at a top of a plurality of battery packs 510. Compared with a manner of disposing the BCU 520 at a bottom of the battery pack 510, this manner can save cables. In addition, if the battery pack 510 is disposed on a bottom, the BCU 520 is easily damped. In this embodiment of this application, the BCU 520 is disposed on the plurality of battery packs 510. This can prevent the BCU 520 from being damped. When the BCU 520 is faulty, the BCU 520 can be directly removed for maintenance without removing the battery pack 510. This facilitates subsequent maintenance and detection.

For a specific structure of the BCU 520, refer to FIG. 10. FIG. 10 is a schematic diagram of a structure of the BCU. A groove 551 and a second connector 550 are disposed on a lower surface 5202 of the BCU 520. Correspondingly, a first connector 540 on an upper surface of a battery pack 511 is plugged into the groove 551 on the lower surface of the BCU 520, and is connected to the corresponding second connector 550, so that the battery pack 511 is electrically connected to the BCU 520, and a plurality of battery packs 510 are electrically connected to the BCU 520. For specific structures of the groove 551 and the second connector 550 that are disposed on the lower surface 5202 of the BCU 520, refer to specific structures of the groove 551 and the second connector 550 that are disposed on the lower surface 5101 of the battery pack 510.

A positioning slot is disposed on the lower surface 5202 of the BCU 520, and is pluggably connected to a positioning pin 590 that is disposed on an upper surface of the battery pack 511 in a protruding manner, or a positioning pin is disposed on the lower surface of the BCU in a protruding manner, and is pluggably connected to a positioning slot disposed on an upper surface of a battery pack, to further improve accuracy of interconnection of the BCU 520 and the battery pack 511. For specific structures of the positioning slot disposed on the lower surface 5202 of the BCU 520 and the positioning pin 580 on the upper surface of the battery pack 511, refer to specific structures of the positioning pin 580 disposed on the upper surface of the battery pack 510 and the positioning slot on the lower surface.

A fastening plate 590 and a plurality of fastening sub-plates 5901 are disposed on the upper surface of the battery pack 511, to limit the BCU 520. Correspondingly, a recessed portion needs to be disposed at a bottom of the BCU 520 to match a fastening plate on the upper surface of the battery pack 511.

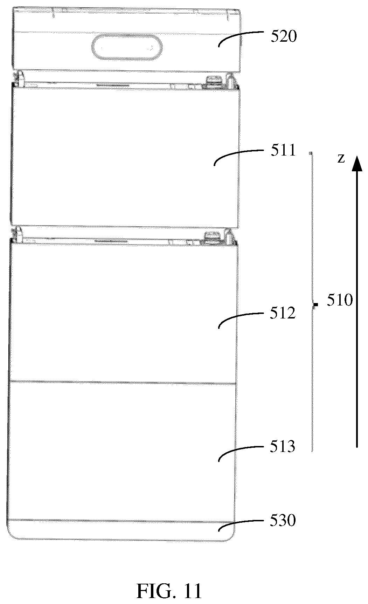

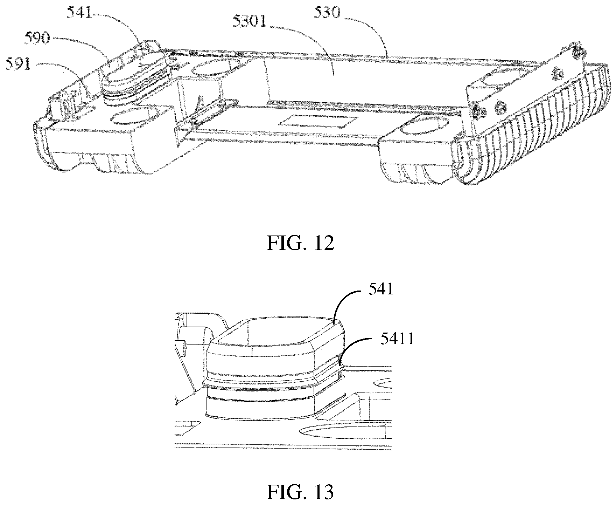

In an example, the energy storage apparatus 500 further includes a base 530. Refer to a schematic diagram of a structure of the energy storage apparatus 500 shown in FIG. 11. A plurality of battery packs 510 are stacked on the base 530. The base 530 is used as a basis for supporting a plurality of battery packs 510 and a BCU 520. This improves support stability and reliability of an overall structure of the energy storage apparatus 500. For a specific structure of the base 530, refer to FIG. 12. A protective part 541 is disposed on an upper surface 5301 of the base 530, and the protective part 541 is plugged into a groove 551 located on a lower surface of a battery pack 513, so that the battery pack 513 is mechanically connected to the base 530, and the plurality of battery packs 510 are fastened to the base 530. For a specific structure of the protective part 541 disposed on the upper surface 5301 of the base 530, refer to a specific structure of the protective part 541 disposed on an upper surface of the battery pack 510.

FIG. 13 is a schematic diagram of a structure of the protective part 541 on the base 530. A first sealing ring 5411 is sleeved on a periphery of the protective part 541 on the upper surface 5301 of the base 530, to improve airtightness between the base 530 and the battery pack 513.

Similarly, a positioning pin 580 may be disposed on the base 530. When the battery pack 510 is stacked on the base 530, the positioning pin 580 on the upper surface 5101 of the base 530 is plugged into a positioning slot on a lower surface 5102 of the battery pack 510, to provide a guiding function. A mechanical connection between the battery pack 513 and the base 530 is implemented through a pluggable connection between the positioning pin 580 and the positioning slot. Alternatively, a positioning slot is disposed on the upper surface of the base 530, and a positioning pin is disposed on the lower surface of the battery pack 513. For the positioning pin 580 on the upper surface 5301 of the base 530 and the positioning slot disposed on the lower surface of the battery pack 513, refer to specific structures of the positioning pin 580 disposed on the upper surface of the battery pack 510 and the positioning slot disposed on the lower surface.

When the battery pack 513 is stacked on the base 530, a fastening plate 590 may be disposed at an edge of the upper surface 5301 of the base 530 in a protruding manner, to prevent the battery pack 510 from sliding left or right. Refer to a schematic diagram of a structure of the base 530 shown in FIG. 12. The fastening plate 590 may limit a battery pack located on the battery pack. A plurality of fastening sub-plates 5901 may be further disposed on the upper surface 5301 of the base. All the plurality of fastening sub-plates 5901 are fastened to the fastening plate 590. The plurality of fastening sub-plates 5901 extend in the x direction. An extension direction of the plurality of fastening sub-plates 5901 is perpendicular to a protruding direction of the fastening plate, to enhance mechanical strength of the fastening plate 590. For the plurality of fastening sub-plates 5901, refer to a specific structure of the battery pack 510.

Generally, the battery packs 510 communicate with each other in a wired manner. As a result, there are a large quantity of sockets, plugs, and a large quantity of cables and signal cables between the battery packs 510. This results in high costs and disordered and complex cables in the energy storage apparatus 500. When a user mounts the energy storage apparatus, a large quantity of cable connections result in a long assembly time, a risk of a missing connection/an incorrect connection, and low reliability of a cable connection manner. Therefore, a plurality of mounting holes may be disposed in a first connector 540 and a second connector 550 to accommodate a power terminal and a signal terminal that extend from the battery pack. The first connector 540 and the second connector 550 are interconnected accurately, to implement an accurate connection between an internal electrical terminal and the signal terminal, and a common cable is not needed, so that complexity of a cable connection is reduced, and the risk of the missing connection/incorrect connection is reduced.

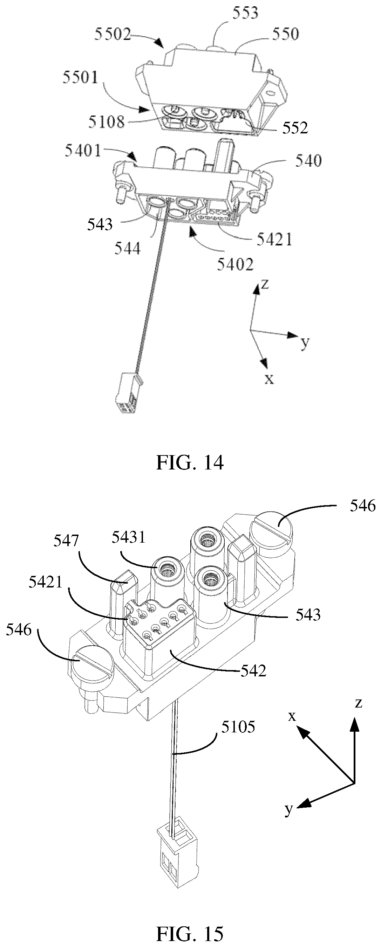

Refer to a schematic diagram of a pluggable connection between the first connector 540 and the second connector 550 shown in FIG. 14 and a schematic diagram of a structure of the first connector 540 at a top angle and in a z direction shown in FIG. 15. The z direction is a height direction of the first connector 540, and the first connector 540 includes two sides in the z direction. A side away from the battery pack 510 in which the first connector 540 is located is a first side 5401, and a plug 542 is disposed on the first side 5401. A side that is of the first connector 540 and that is close to the battery pack 510 is a second side 5402, and the second side 5402 has a first accommodating cavity 544. The plug 542 extends to the first accommodating cavity 544. The plug 542 includes a plurality of first mounting holes 5421, and the first mounting holes 5421 extend in the z direction. A side that is of the second connector 550 and that is away from the battery pack 510 in which the second connector 550 is located is a first side 5501, and a socket 552 is disposed on the first side 5501.

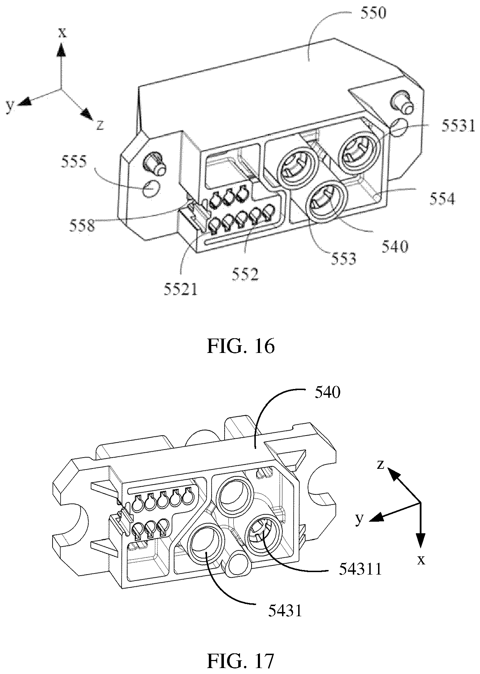

Still refer to schematic diagrams of a structure of the second connector 550 in the z direction shown in FIG. 14 and FIG. 16. A side that is of the second connector 550 and that is away from the battery pack 510 in which the second connector 550 is located is a second side 5502, and the second side 5502 has a second accommodating cavity 554. The socket 552 extends to the second accommodating cavity 554, the socket 552 includes a plurality of second mounting holes 5521, and the second mounting holes 5521 extend in the z direction. The plug 542 of the first connector 540 is plugged into the socket 552 of the second connector 550. The plurality of first mounting holes 5421 of the first connector 540 and the plurality of second mounting holes 5521 of the second connector 550 are in a one-to-one correspondence. A peripheral diameter of the plug 542 may be slightly less than an inner diameter of the socket 552. The plug 542 matches the socket 552, to implement the pluggable connection between the first connector 540 and the second connector 550, and further improve accurate alignment between battery packs 510. In addition, a same quantity of first mounting holes 5421 and second mounting holes 5521 that are oppositely disposed are respectively disposed on the first connector 540 and the second connector 550, to provide mounting space for connection terminals that respectively extend from adjacent battery packs 510. This avoids leakage of a cable outside the energy storage apparatus 500, and reduces a risk that the connection terminals are damaged due to moisture. The first connector 540 matches the second connector 550 to implement matching between a signal terminal and an electrical terminal of the battery pack 510, so that a signal connection and an electrical connection can be implemented after assembly of a plurality of battery packs 510 is completed, and a common cable is not needed. This reduces a mounting time and reduces a risk of an incorrect connection and a missing connection.

After a plurality of battery packs 510 are stacked, electrical terminals and signal terminals between the plurality of battery packs 510 need to be connected to implement electrical connections between the plurality of battery packs 510. The electrical terminals and the signal terminals of the battery packs 510 are electrically connected through corresponding first connectors 540 and second connectors 550. For example, each battery pack 510 includes a plurality of first connection terminals 5105 and plurality of second connection terminals 5106. The plurality of first connection terminals 5105 are in a one-to-one correspondence with the plurality of first mounting holes 5421. The plurality of first connection terminals 5105 are respectively plugged into the plurality of first mounting holes 5421. The plurality of second connection terminals are in a one-to-one correspondence with the plurality of second mounting holes 5521. The plurality of second connection terminals are respectively plugged into the plurality of second mounting holes 5521. The first connection terminals 5105 are electrically connected to the corresponding second connection terminals 5106 respectively.

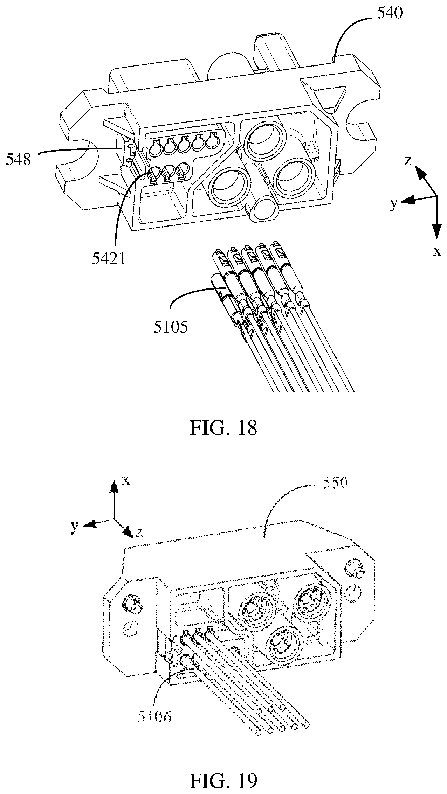

Refer to schematic diagram of a structure of the first connector shown in FIG. 17 and a schematic diagram of assembly of the first connector and the first connection terminals shown in FIG. 18. A structure in which the battery pack 512 and the battery pack 511 are stacked is used as an example for description. The first connection terminals 5105 may be signal terminals extending from the upper surface of the battery pack 512, the second connection terminals 5106 may be signal terminals extending from the lower surface of the battery pack 511, and the first connection terminals 5105 are respectively plugged into the first mounting holes 5421. Refer to a schematic diagram of assembly of the second connector and the second connection terminals shown in FIG. 19. The second connection terminals 5106 are respectively plugged into the second mounting holes 5521. Further, as shown in FIG. 14, the first mounting holes 5421 and the second mounting holes 5521 are correspondingly disposed to implement electrical connections between the first connection terminals 5105 and the corresponding second connection terminals 5106.

Specifically, both the first connection terminal 5105 and the second connection terminal 5106 may be stamping forming contacts. Therefore, material costs and assembly costs are low. In a process of stacking battery packs, pins are not disconnected from connectors even if being heavily impacted. Regardless of whether the connectors are obliquely plugged or vertically drop, connection reliability can be ensured, and blind-mate mounting can be met in a heavy stacking scenario.

Similarly, a signal connection between the BCU 520 and the battery packs 510 is implemented in this interconnection manner. This reduces cables for stacking the battery packs 510, reduces a risk of an incorrect connection and a missing connection in a mounting process, and reduces a mounting time and labor costs of the energy storage apparatus 500.

It should be understood that, the first connector 540 and the second connector 550 may be made into an integrated part by using an integrated injection molding process, and a material may be plastic. Therefore, a structure is simple, and costs are low.

A positioning rod and a positioning hole may be respectively disposed on the first connector 540 and the second connector 550, and the positioning rod and the positioning hole are connected in a pluggable manner, to further improve accuracy of interconnection of the first connector 540 and the second connector 550.

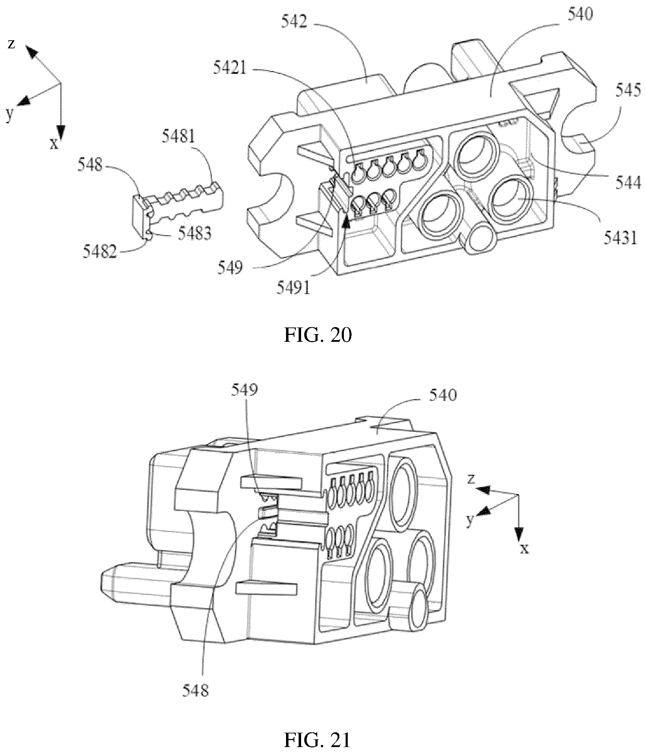

Refer to schematic diagrams of structures of a front side and a side surface of the first connector 540 respectively shown in FIG. 20 and FIG. 21, the first connector 540 may include a first locking structure 548, a first mounting groove 549 extending in the z direction is disposed in the first accommodating cavity 544, and the first locking structure 548 is slidably connected to the first mounting groove 549, to enhance tightness of plugging the first connection terminals 5105 into the first mounting holes 5421.

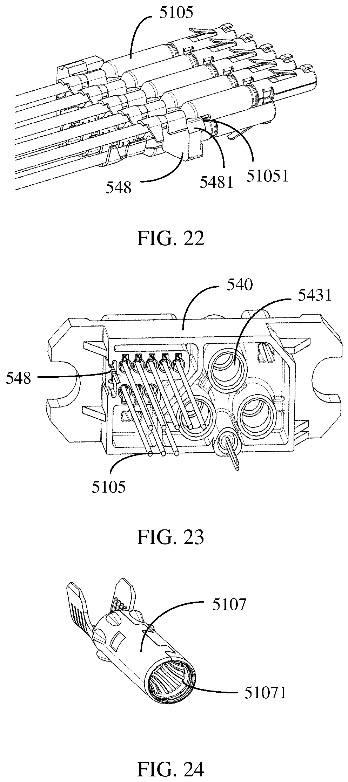

Refer to a schematic diagram of a structure of the first connection terminal 5105 shown in FIG. 22. Limiting grooves 51051 are disposed on the first connection terminals 5105. Limiting protrusions 5481 are disposed on the first locking structure 548. When the first locking structure 548 slides to a first position, the limiting protrusions 5481 are located in the limiting grooves 51051, to limit movement of the first connection terminals 5105 in the z direction.

During specific implementation, the first locking structure 548 may be pre-mounted on the first connector 540, and the first locking structure 548 is in a pre-mounting position. In this case, the limiting protrusions 5481 avoid the first mounting holes 5421. Then, the first connection terminal 5105 crimped with a first cable bundle is plugged into the first mounting hole 5421. After the first connection terminal 5105 is properly plugged, the first locking structure 548 is pushed to slide to the first position, and the first locking structure 548 remains in the first position. In this case, the limiting protrusion 5481 is located in the limiting groove 51051 of the first connection terminal 5105, so that the first locking structure 548 can limit movement of the first connection terminal 5105 in the z direction, and a pin is not disconnected from the first connection terminal 5105 under stress.

As shown in FIG. 20, a first end of the first locking structure 548 is plugged into the first mounting groove 549. In a possible example, positioning protrusions 5482 may be disposed at a second end of the first locking structure 548, and positioning grooves 5491 may be disposed at an end that is of the first mounting groove 549 and that is close to the second end of the first locking structure 548. When the first locking structure 548 slides to the first position, the positioning protrusions 5482 are clamped to the positioning grooves 5491. Therefore, the first locking structure 548 is locked through matching between the positioning protrusions 5482 and the positioning grooves 5491.

For example, a stop protrusion is disposed at an end that is of the first mounting groove 549 and that is close to the first end of the first locking structure 548. When the first locking structure 548 slides to the first position, the first end of the first locking structure 548 presses against the stop protrusion (not shown in the figure), to limit a sliding stroke of the first locking structure 548.

During specific implementation, a disassembly hole 5483 may be disposed at the second end of the first locking structure 548. When the first locking structure 548 needs to be removed, the first locking structure 548 may be pried from the disassembly hole 5483 by using a tool such as a screwdriver, so that the first locking structure 548 returns to the pre-mounting position. The first locking structure 548 may be further removed from the first connector 540 after returning to the pre-mounting position, to be replaced with a new first locking structure 548, and the first connector 540 is not damaged. In addition, the removed first locking structure 548 may be reused for a specific quantity of times. After the first locking structure 548 returns to the pre-mounting position, the first connection terminal 5105 may be removed from the first mounting hole 5421, to remove the first connection terminals 5105.

During specific implementation, a plurality of first mounting holes 5421 may be arranged in the x direction, or may be arranged in the y direction, where the x direction is a width direction of the first connector 540, and the y direction is a length direction of the first connector 540. Correspondingly, a plurality of limiting protrusions 5481 may be disposed on the first locking structure 548, and the plurality of limiting protrusions 5481 may be arranged in the y direction, in other words, the plurality of limiting protrusions 5481 may be arranged in an extension direction of the first locking structure 548, that is, the plurality of limiting protrusions 5481 may be arranged in a direction from the first end to the second end of the first locking structure 548. A quantity of limiting protrusions 5481 may be the same as a quantity of first mounting holes 5421.

In an actual application, as shown in FIG. 22 and FIG. 23, when the first locking structure 548 is in the pre-mounting position, one limiting protrusion 5481 may be located between two adjacent first mounting holes 5421, or located on one side of one first mounting hole 5421 in the y direction. For example, a limiting protrusion 5481 that is in a plurality of limiting protrusions 5481 and that is located at one end may be located on one side of a first mounting hole 5421 that is in a plurality of first mounting holes 5421 and that is located at the end. When the first locking structure 548 is in the first position, the limiting protrusions 5481 may be aligned with the first mounting holes 5421 in the z direction, to match limiting grooves 51051 of first connection terminals 5105, so as to limit movement of the first connection terminal 5105 in the z direction.

In addition, a spring plate may be disposed on the first connection terminal 5105, and a clamping slot may be disposed in the first mounting hole 5421. When the first connection terminal 5105 is assembled into the first mounting hole 5421, the spring plate is clamped into the clamping slot, to lock the first connection terminal 5105. The first locking structure 548 is plugged into the first mounting groove 549 to implement secondary locking. When the first connection terminal 5105 needs to be removed, a tool such as a long and thin sharp-pointed awl may be used to penetrate into the first mounting hole 5421 and press the spring plate on the first connection terminal 5105, to pull, from the tail of the first connection terminal 5105, a first cable bundle connected to the first connection terminal 5105, so as to remove the first connection terminal 5105 from the first mounting hole 5421.

In an example, as shown in FIG. 14 and FIG. 23, the first connector 540 includes a plurality of assembly columns 543, the plurality of assembly columns 543 extend to the first accommodating cavity 544, the assembly column 543 is provided with a third mounting hole 5431, and the third mounting hole 5431 extends in the z direction. The second connector 550 includes a plurality of assembly cavities 553, the plurality of assembly cavities 553 extend to the second accommodating cavity 554, and the assembly cavity 553 is provided with a fourth mounting hole 5531, and the fourth mounting hole 5531 extends in the z direction. The plurality of assembly columns 543 are in a one-to-one correspondence with the plurality of assembly cavities 553, and the assembly columns 543 are plugged into the corresponding assembly cavities 553. The assembly columns 543 are plugged into the corresponding assembly cavities 553, to further implement accurate alignment between adjacent battery packs 510.

The third mounting hole 5431 and the fourth mounting hole 5531 each are configured to mount a connection terminal that has a different function from the first connection terminal. As shown in FIG. 23, each battery pack 510 includes a plurality of third connection terminals and a plurality of fourth connection terminals. The plurality of third connection terminals are in a one-to-one correspondence with the plurality of third mounting holes 5431, the plurality of third connection terminals are respectively plugged into the plurality of third mounting holes 5431, the plurality of fourth connection terminals are in a one-to-one correspondence with the plurality of fourth mounting holes 5531, and the plurality of fourth connection terminals are respectively plugged into the plurality of fourth mounting holes 5531. The third connection terminals are electrically connected to the corresponding fourth connection terminals. For example, the third connection terminal and the fourth connection terminal may be power terminals of a battery module, and the third connection terminal and the fourth connection terminal may be stamping forming contacts. Therefore, material costs and assembly costs are low. The third connection terminals and the fourth connection terminals are respectively plugged into the third mounting holes 5431 and the fourth mounting holes 5531, and the third mounting holes 5431 and the fourth mounting holes 5531 are correspondingly disposed, to implement electrical connections between the third connection terminals and the corresponding fourth connection terminals, so as to implement an electrical connection between a plurality of battery packs 510.

Similarly, an electrical connection between the BCU 520 and the battery packs 510 is implemented in this interconnection manner. This reduces cables for stacking the battery packs 510, reduces a risk of an incorrect connection and a missing connection in a mounting process, and reduces a mounting time and labor costs of the energy storage apparatus 500.

During specific implementation, as shown in FIG. 17 and FIG. 24, a support spring coil 54311 may be disposed in the third mounting hole 5431, and the support spring coil 54311 is clamped in the third mounting hole 5431. The third connection terminal is crimped, then plugged into the third mounting hole 5431, and clamped to the support spring coil 54311, to lock the third connection terminal. In addition, a crown spring may be disposed in the third connection terminal, so that the third connection terminal is stably connected to the fourth connection terminal.

In addition, both the first connector 540 and the second connector 550 each are provided with a floating structure, to avoid a case in which the connectors between battery packs 510 cannot be interconnected accurately due to a material or a manufacturing process, and avoid terminal damage caused by a hard connection. This improves connection efficiency, ensures connection accuracy, and improves tolerance to a processing error. Therefore, a user can perform blind mating to some extent and finally achieve a correct plugging state.

As shown in FIG. 15 and FIG. 20, the floating structure may be: arc-shaped grooves 545 for mounting screws 546 are disposed on both ends that are of the first connector 540 and that are oppositely disposed in the y direction. As shown in FIG. 16, through holes 555 for mounting screws 546 are disposed on both ends of the second connector 550. The arc-shaped grooves 545 of the first connector 540 correspond to the through holes 555 of the second connector 550 up and down. An inner diameter of the arc-shaped groove 545 and an inner diameter of the through hole 555 are both slightly greater than an outer diameter of the screw 546, so that the first connector 540 and the second connector 550 can freely move in a first direction and a second direction. This can avoid a problem that the first connector 540 and the second connector 550 cannot be accurately plugged due to a raw material problem or a manufacturing process, and can prevent a pin from being damaged. For example, a difference between the inner diameter of the arc-shaped groove 545 of the first connector 540 and the inner diameter of the through hole 555 of the second connector 550 and the outer diameter of the screw 546 is ±1 mm.

In addition, the floating structure may also be that an elastic component is disposed in each mounting hole of the first connector 540 and the second connector 550, or the first connector 540 and the second connector 550 are made of an elastic material, so that specific floating space may be allowed when the first connector 540 and the second connector 550 are interconnected.

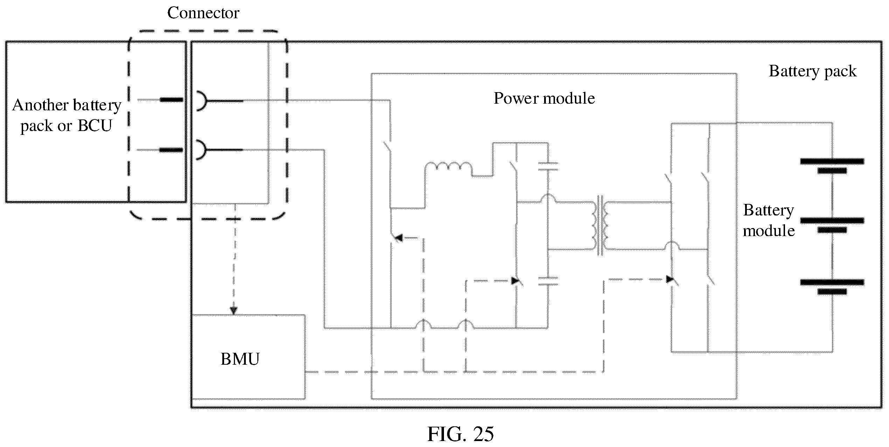

Refer to a schematic diagram of an electrical connection inside the energy storage apparatus 500 shown in FIG. 25. Electrical connections between a plurality of battery packs and between a battery pack and a BCU are implemented through connectors. The battery pack includes a power module and a battery module. A direct current output by the battery module is first boosted by the power module and then output to a direct current bus, to implement a high-voltage serial connection or a high-voltage parallel connection at a system level. This can meet an energy storage requirement in a large-capacity scenario.

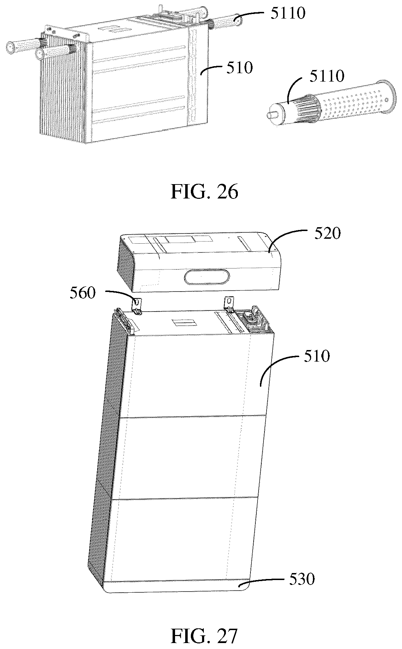

In some examples, as shown in FIG. 26, mounting holes are disposed on side walls of the battery pack 510, and the mounting hole is used to mount a lifting handle 5108. The mounting hole may be a threaded hole. Before a plurality of battery packs 510 are assembled into the energy storage apparatus 500, a metal thread at an end of each lifting handle 5108 is screwed into a threaded hole on the side wall of the battery pack, and two or more persons lift the battery pack for stacking. This improves assembly efficiency of the energy storage apparatus.

In some examples, as shown in FIG. 27, a mounting plate 560 is disposed on a side wall 5103 of the energy storage apparatus 500, and the mounting plate 560 is configured to mount the energy storage apparatus 500 on a building. When the energy storage apparatus 500 is used in a residential scenario, the building may be a wall, and the mounting plate 560 fastens the energy storage apparatus 500 on an indoor or outdoor wall, and an indoor floor area is not occupied. This facilitates use and design by a user. A specific position of the mounting plate 560 and a quantity of mounting plates 560 are not specifically limited in embodiments of this application. Persons skilled in the art may design a specific position of the mounting plate 560 and a quantity of mounting plates 560 based on an actual requirement. For example, the mounting plate 560 may be located on a side wall 5103 between a BCU 520 and a top battery pack 510, and there may be two mounting plates 560.

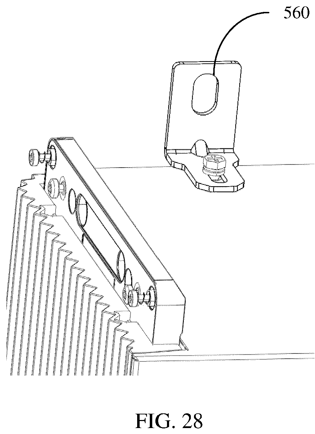

Specifically, as shown in FIG. 28, the mounting plate 560 may be an L-shaped fastening plate 590. First, one end of the L-shaped fastening plate 590 is fastened to a battery pack 510 through a screw, and then the other end of the L-shaped fastening plate 590 is fastened to the side wall 5103 of the energy storage apparatus 500 through an expansion bolt. When the energy storage apparatus 500 is mounted on a wall, the mounting plate 560 may implement a stable connection between the energy storage apparatus 500 and a wall body. The energy storage apparatus 500 is fastened on the wall. This can save floor space occupied by the energy storage apparatus 500. In addition, the mounting plate 560 is disposed, so that the energy storage apparatus 500 can be prevented from tilting.

Based on a same inventive concept, this application further provides an energy storage system. The energy storage system includes an energy storage apparatus 500 and an inverter. The inverter is configured to convert a direct current output by the energy storage apparatus 500 into an alternating current, and output the alternating current to an external load or a power grid; and/or the inverter is configured to convert an alternating current output by the power grid into a direct current, and output the direct current to the energy storage apparatus 500.

Based on a same inventive concept, this application further provides a battery pack 510. Refer to schematic diagrams of structures of the battery pack shown in FIG. 3 and FIG. 4. A protective part 541 and a first connector 540 are disposed on an upper surface 5101 of the battery pack 510 in a protruding manner, and the protective part 541 is disposed around a periphery of the first connector 540. A groove 551 and a second connector 550 are disposed on a lower surface 5102 of the battery pack 510. An orthographic projection of the protective part 541 in a height direction of the battery pack 510 falls within an orthographic projection of the groove 551 in the height direction of the battery pack 510.

A fastening plate 590 is disposed at an edge of the upper surface of the battery pack 510 in a protruding manner, a recessed portion is disposed at an edge of the lower surface of the battery pack 510, and an orthographic projection of the fastening plate 590 in the height direction of the battery pack 510 falls within an orthographic projection of the recessed portion in the height direction of the battery pack 510.

A plurality of fastening sub-plates 5901590 are disposed on the upper surface of the battery pack 510, all the plurality of fastening sub-plates 5901590 are fastened to the fastening plate 590, and an extension direction of the plurality of fastening sub-plates 5901590 is perpendicular to a protruding direction of the fastening plate 590.

A positioning pin 580 is disposed on the upper surface of the battery pack 510 in a protruding manner, the positioning pin 580 extends in the height direction of the battery pack 510, a positioning slot is disposed on the lower surface of the battery pack 510, an extension direction in which the positioning slot extends in the height direction of the battery pack 510 is opposite to an extension direction of the positioning pin 580, and an orthographic projection of the positioning pin 580 in the height direction of the battery pack falls within an orthographic projection of the positioning slot in the height direction of the battery pack.

Based on a same inventive concept, this application further provides an energy storage apparatus. The energy storage apparatus includes at least one battery pack 510 disposed in the third aspect and a base. The base is located under the battery pack 510. The energy storage apparatus further includes a battery control unit BCU, and the BCU is located at a top of the battery pack 510.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. An energy storage apparatus with a stacked structure, wherein the energy storage apparatus comprises a plurality of battery packs; the plurality of battery packs are stacked; and in two contact surfaces of any two adjacent battery packs in the plurality of battery packs, a protective part and a first connector are disposed on one of the contact surfaces in a protruding manner, the protective part is disposed around a periphery of the first connector, and a groove and a second connector are disposed on the other of the contact surfaces, wherein the second connector is located in the groove, the protective part is pluggably connected to the groove, and the first connector is pluggably connected to the second connector.

2. The energy storage apparatus according to claim 1, wherein the first connector is pluggably connected to the second connector, to fasten the two adjacent battery packs and connect the two adjacent battery packs in series or in parallel; and the protective part is pluggably connected to the groove, to fasten the two adjacent battery packs.

3. The energy storage apparatus according to claim 1 or 2, wherein an orthographic projection of the protective part in a stacking direction of the plurality of battery packs falls within an orthographic projection of the groove in the stacking direction.

4. The energy storage apparatus according to any one of claims 1 to 3, wherein a maximum spacing of an edge of a periphery of the protective part is less than or equal to a maximum spacing of an inner wall of the groove.

5. The energy storage apparatus according to any one of claims 1 to 4, wherein a height of the periphery of the protective part is less than or equal to a depth of the groove.

6. The energy storage apparatus according to any one of claims 1 to 5, wherein the battery pack comprises a power module and a battery module, and the power module and the battery module are arranged in a direction perpendicular to the stacking direction of the plurality of battery packs; and
a first connector and a second connector are respectively located on two surfaces that are of the power module and that are oppositely disposed in the stacking direction.

7. The energy storage apparatus according to any one of claims 1 to 6, wherein in any two adjacent battery packs in the plurality of battery packs, a fastening plate is disposed at an edge of an upper surface of one of the battery packs in a protruding manner, and a recessed portion is disposed at an edge of a lower surface of the other of the battery packs; and the fastening plate is located in the recessed portion.

8. The energy storage apparatus according to claim 7, wherein an orthographic projection of the fastening plate in the stacking direction of the plurality of battery packs falls within an orthographic projection of the recessed portion in the stacking direction.

9. The energy storage apparatus according to claim 7 or 8, wherein a plurality of fastening sub-plates are disposed on an upper surface of each of the plurality of battery packs, all the plurality of fastening sub-plates are fastened to the fastening plate, and an extension direction of the plurality of fastening sub-plates is perpendicular to a protruding direction of the fastening plate.

10. The energy storage apparatus according to claim 9, wherein a chamfer is disposed at an edge, that is of an upper surface of each of the plurality of fastening sub-plates and that is far away from the fastening plate.

11. The energy storage apparatus according to any one of claims 1 to 10, wherein two adjacent up-down side walls of any two adjacent up-down battery packs in the plurality of battery packs are fastened to one connection plate.

12. The energy storage apparatus according to any one of claims 1 to 11, wherein the energy storage apparatus comprises a battery control unit BCU, and the BCU is disposed at a top of the plurality of battery packs; and
in two contact surfaces of the top battery pack in the plurality of battery packs and the BCU, a protective part and a first connector are disposed on one of the contact surfaces in a protruding manner, the protective part is disposed around a periphery of the first connector, and a groove and a second connector are disposed on the other of the contact surfaces, wherein the second connector is located in the groove, the protective part is pluggably connected to the groove, and the first connector is pluggably connected to the second connector.

13. The energy storage apparatus according to any one of claims 1 to 12, wherein the energy storage apparatus comprises a base, and the base is disposed at a bottom of the plurality of battery packs; and
in two contact surfaces of the bottom battery pack in the plurality of battery packs and the base, a protective part is disposed on the contact surface of the base in a protruding manner, and a groove is disposed on the contact surface of the battery pack, wherein the protective part is pluggably connected to the groove.

14. The energy storage apparatus according to any one of claims 1 to 13, wherein in two contact surfaces of any two adjacent battery packs in the plurality of battery packs, a positioning pin is disposed on one of the contact surfaces in a protruding manner, the positioning pin extends in the stacking direction of the plurality of battery packs, and a positioning slot is disposed on the other of the contact surfaces, wherein the positioning slot extends in the stacking direction, and the positioning pin is pluggably connected to the positioning slot.

15. The energy storage apparatus according to any one of claims 1 to 14, wherein the first connector and the second connector each comprise two ends that are oppositely disposed in the direction perpendicular to the stacking direction of the plurality of battery packs, an arc-shaped groove is disposed at each of the two ends of the first connector, a through hole is disposed at each of the two ends of the second connector, the arc-shaped groove and the through hole are used to mount a screw, and an inner diameter of the arc-shaped groove and an inner diameter of the through hole are greater than an outer diameter of the screw.

16. An energy storage system, comprising the energy storage apparatus according to any one of claims 1 to 15 and an inverter, wherein the inverter is configured to convert a direct current output by the energy storage apparatus into an alternating current, and output the alternating current to an external load or a power grid; and/or the inverter is configured to convert an alternating current output by the power grid into a direct current, and output the direct current to the energy storage apparatus.

17. A battery pack, wherein a protective part and a first connector are disposed on an upper surface of the battery pack in a protruding manner, the protective part is disposed around a periphery of the first connector, a groove and a second connector are disposed on a lower surface of the battery pack, and an orthographic projection of the protective part in a height direction of the battery pack falls within an orthographic projection of the groove in the height direction.

18. The battery pack according to claim 17, wherein a fastening plate is disposed at an edge of the upper surface of the battery pack in a protruding manner, a recessed portion is disposed at an edge of the lower surface of the battery pack, and an orthographic projection of the fastening plate in the height direction of the battery pack falls within an orthographic projection of the recessed portion in the height direction.

19. The battery pack according to claim 18, wherein a plurality of fastening sub-plates are disposed on the upper surface of the battery pack, all the plurality of fastening sub-plates are fastened to the fastening plate, and an extension direction of the plurality of fastening sub-plates is perpendicular to a protruding direction of the fastening plate.

20. The battery pack according to any one of claims 17 to 19, wherein a positioning pin is disposed on the upper surface of the battery pack in a protruding manner, the positioning pin extends in the height direction of the battery pack, a positioning slot is disposed on the lower surface of the battery pack, the positioning slot extends in the height direction of the battery pack, and an orthographic projection of the positioning pin in the height direction of the battery pack falls within an orthographic projection of the positioning slot in the height direction.
